# EUROPEAN PATENT APPLICATION

(11) **EP 2 740 660 A1**
(43) Date of publication of application: **11.06.2014**
(21) Application number: 12008192.2
(22) Date of filing: 07.12.2012
(51) Int. Cl.: B62M 11/14, B62M 6/50, B62M 6/55

(54) **Pedalling assisting apparatus**

(71) Applicant: RGM S.p.A., 16153 Genova (IT)
(72) Inventor: Lotti, Fabio, I - 16149 Genova GE (IT); Pallottini, Alberto, I - 16157 Genova GE (IT)
(74) Representative: Natali, Dario

(57) **Abstract**

Pedalling assisting apparatus for pedal-driven vehicles, comprising a container body (100) connectable to the frame of the vehicle in the proximity of the pedal shaft (90), drive means (21), at least one electronic control system (2), and mechanical reduction means (12) operatively connected with both the pedal shaft (90) and the drive means (21), characterized in that the axis of the drive means (21), the axis of the mechanical reduction means (12) and the axis of the pedal shaft (90) are coaxial with each other.

## Description

### TEXT OF THE DESCRIPTION

The present invention relates to a pedalling assisting apparatus for pedal-driven vehicles.

Several solutions are currently employed for assisting the cyclist in riding on rough paths that require a considerable effort.

Advantageously, these solutions are designed for providing bicycles or the like with electric motors powered by battery packs or the like and controlled by sensors for detecting the pedalling activity; when required, said sensors activate the electric motor, which is appropriately connected with the drive wheel in order to assist the cyclist.

Battery packs are recharged either via the mains supply with the use of a suitable battery charger or by the electric motor acting as an electric current generator, and they provide the power required by the electric motor as needed.

In this type of solution, the motor and the mechanical reduction gearbox are located on different axes of rotation, giving rise to various construction and operational issues.

In fact, the coupling of the reduction gearbox with the transmission ring gear is exposed to the outside, resulting in both a risk of contamination on the road with dust, dirt, mud, etc., and a risk of being subjected to impacts.

Moreover, the fact that the motor and the reduction gearbox are located on different axes involves various issues, including a malfunction of the sensor intended for detecting the pedalling activity and an offset of the planes of the gears when the cyclist is pushing on the pedals.

If the detection sensor is malfunctioning, the entire pedalling assisting system is ineffective because the processing/control means either receive incorrect information and data or receive them with a time delay which causes the pedalling assisting system to manage the pedalling activity with a low degree of feedback and efficiency.

The offset of the axis of the motor with respect to the axis of the reduction gearbox should be also considered, since the motor and the reduction gearbox operate on different planes and therefore are subjected to different mechanical stresses, especially when the cyclist is pushing hard on the pedals, thus involving a risk of damaging the pinion or the gears of the mechanical reduction gearbox.

Currently, there are also solutions which are not coaxial, in which the reduction gearbox is entirely accommodated within a container body so as to protect it from external contamination and potential impacts, however, these solutions are cumbersome and not able to solve the problems related to the offset of the axis of the motor with respect to the axis of the reduction gearbox.

The prior art also includes devices in which the motor and the reduction gearbox are coaxial so as to limit and reduce contamination on the road, but these solutions are also cumbersome and heavy.

Therefore, an aim of the present invention is to provide a pedalling assisting apparatus which is free of components exposed to the outside, thereby avoiding the risks of contamination on the road and potential impacts.

A further aim is to provide a pedalling assisting apparatus in which the motor and the reduction gearbox are coaxial, so as to ensure an improved operation of the detection sensors as well as to obtain an apparatus which is more compact, robust and light in weight.

Accordingly, an object of the present invention is a pedalling assisting apparatus for pedal-driven vehicles, comprising a container body connectable to the frame of the vehicle in the proximity of the pedal shaft, drive means, at least one electronic control system, and mechanical reduction means operatively connected with both the pedal shaft and the drive means, **characterized in that** the axis of the drive means, the axis of the mechanical reduction means and the axis of the pedal shaft are coaxial with each other.

A further object of the present invention is a pedalling assisting apparatus wherein said pedal shaft comprises an anti-rotation system which allows the movement of the pedal shaft to be disengaged from the movement of both the transmission ring gear and the mechanical reduction gearbox, thereby allowing the drive wheel to freely rotate when the pedals are stationary and the cyclist is not pushing on the pedals, for example while riding on a flat road or downhill.

These and other features of the invention, and the advantages derived therefrom, will become apparent from the following detailed description of a preferred embodiment thereof which is provided by way of a non-limiting example with reference to the accompanying drawings, in which:
Fig. 1 is a sectional view of the apparatus according to the present invention as installed on the frame of a bicycle;
Fig. 2 is a side view of the apparatus according to the present invention as installed on the frame of a bicycle;
Fig. 3 is a block diagram of the electronic control system for the apparatus according to the present invention.

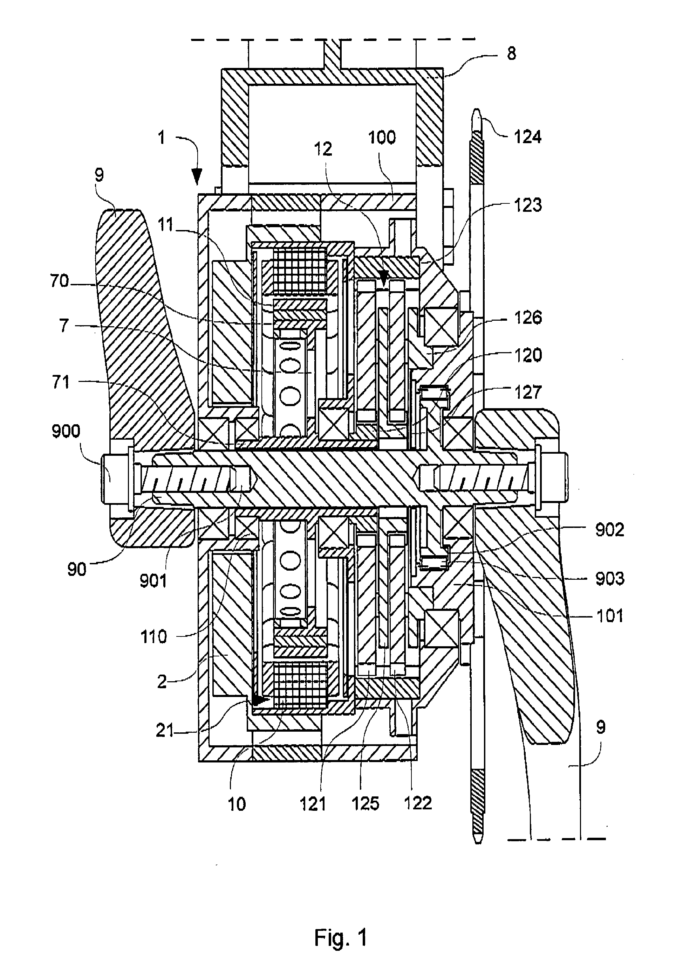

Fig. 1 shows the apparatus according to the present invention as installed on the frame of a bicycle.

In the Figure there are shown the container body 100 of the pedalling assisting apparatus 1, said container body being suitably connected to the frame 8 of the bicycle in the proximity of the pedal shaft 90, as well as the locking member 101.

The pedal shaft 90, the drive means 21 comprising the rotor 11 and the stator 10, the electronic system 2 and the mechanical epicyclical reduction gearbox 12 are accommodated within said container body 100.

The pedals shaft 90 is provided with threaded holes 901 which allow the pedal supports 9 to be secured by securing means 900 which are substantially in the form of screws which are screwed into said threaded holes 901.

The disc 7 is provided with a cylindrical member 71, one end of said cylindrical member 71 being provided with a sprocket wheel 120 to transmit the rotational movement from the mechanical epicyclical reduction gearbox 12 to the drive means 21 and vice versa.

Said disc 7 is suitably shaped so that the side surface 70 can accommodate the rotor 11 of the drive means 21, said rotor 11 of the drive means 21 being arranged on the outer circumference of said side surface.

The stator 10 of the drive means 21 is positioned opposite to the rotor 11, said stator 10 being suitably connected with the electronic system 2 intended for controlling said drive means 21.

The mechanical epicyclical reduction gearbox 12 comprises a sprocket wheel 120 acting as a pinion and keyed to the cylindrical member 71 of the disc 7, a plurality of toothed (planet) wheels 121, 122, the internally-toothed ring gear 123, a first planetary gear carrier (or planet carrier) 125, and a second planetary gear carrier (or planet carrier) 126 having secured thereto the locking member 101 which is integral with the transmission ring gear 124 transmitting the movement from the mechanical epicyclical reduction gearbox 12 to the drive wheel via suitable transmission means, such as transmission chains or the like.

The sprocket wheel 120 acts as a pinion or sun gear to rotate the first planet carrier 125, having mounted thereto said plurality of toothed wheels 121, by meshing with the plurality of toothed wheels 121.

This first gear assembly comprising said sprocket wheel 120 acting as a pinion, said first plurality of toothed wheels 121, said first planet carrier 125 and the internally-toothed ring gear 123 allows the first reduction step of the mechanical epicyclical reduction gearbox 12 to be performed.

The first planet carrier 125 has a radially-toothed, axially-projecting sleeve 127 meshing with the plurality of toothed wheels 122, wherein said plurality of toothed wheels 122 are meshed with the internally-toothed ring gear 123, said internally-toothed ring gear 123 being secured to the container body 100 and integral therewith.

Said second gear assembly comprising the sleeve 127, the plurality of toothed wheels 122, the internally-toothed ring gear 123 and the second planet carrier 126 allows the second reduction step of the mechanical epicyclical reduction gearbox 12 to be performed.

Said plurality of toothed wheels 121, 122 are meshed with the internally-toothed ring gear 123 which is secured to the container body 10 and integral therewith.

In addition, the plurality of toothed wheels 122 are mounted to the second planet carrier 126, said second planet carrier 126 being secured to the locking member 101 by suitable securing means, the locking member being integral with the transmission ring gear 124.

When the cyclist is pedalling, he/she causes the pedals shaft 90 to rotate, thereby transmitting the rotational movement to the locking member 101 as well as to the reduction assembly 12, and therefore to the drive means 21, via the second planet carrier 126, and said movement is detected and monitored by the pedalling sensor means 110 so as to change the operational configuration of the drive means 21 which can act as either an electric motor or an electric current generator.

In a preferred embodiment, said pedalling sensor means 110 include at least one bearing provided with sensor(s) and comprising an encoder to detect the number of revolutions of the pedal shaft 90.

In different embodiments of the apparatus according to the present invention, said pedalling sensor means 110 comprise bearings with sensor(s) for detecting the number of revolutions of the pedal shaft 90 and/or torque-detecting means, depending on the type of application, and said electronic control system 2 further comprises means for detecting the speed of the bicycle.

When the pedalling sensor means 110 detect a number of revolutions which is lower than a certain threshold value as set by the cyclist, the drive means 21 are either inoperative or operative in the electric generator-mode to produce electric current which is stored in the power supply/storage means 21; when said sensor means 110 detect a number of revolutions which is greater than a certain threshold value, the drive means 21 are operative in the motor-mode to provide mechanical power for assisting the cyclist in pedalling.

In fact, the logic of the system, resulting from current legislation, is to activate the drive means 21 in the motor-mode exclusively when the cyclist is pushing on the pedals, and to deactivate them when the cyclist is not pedalling or he/she reduces the pedalling rate and therefore the number of revolutions of the pedal shaft 90.

Advantageously, as for the production of electric current, the operation of the drive means 21 in the generator-mode is not strictly related neither to the number of revolutions of the pedal shaft nor to the torque provided by the cyclist, but it also depends on the type of application and the user, who can easily set the type of application via the display/control means 25.

In a second embodiment, the pedalling assisting apparatus according to the present invention involves the use of sensor means (not shown) for detecting the speed of the bicycle in order to determine the speed of the bicycle while in movement.

When the drive means 21 are in the motor-mode and a bicycle speed of more than 25 km/h is detected by the sensor means intended for detecting the speed of the bicycle, the processing/control means prevent said drive means 21 from outputting power since motor-vehicles exceeding such a speed are considered as motorcycles by current legislation.

The mechanical epicyclical reduction gearbox 12 enables the installation of drive means 21 which are reduced in size, thereby obtaining an advantage in terms of overall dimensions, weight and efficiency of the apparatus according to the present invention.

In fact, said mechanical reduction gearbox 12 decreases the number of revolutions of the drive means 21 by increasing the drive torque available for the transmission ring gear 124.

The rules for the approval of equipment similar to the apparatus described herein provides that the electric motor can push the bicycle and the cyclist up to 25 km/h; in order to fulfil this requirement, it is necessary to install drive means which can deliver a significantly high torque value; this requires the use of drive means which are increased in size and weight.

The apparatus according to the present invention includes the use of a two-stage mechanical epicyclical reduction gearbox which allows both the number of revolutions of the pedal shaft to be reduced and the torque output to be increased; this enables the use of drive means which are decreased in size and weight, thereby increasing the efficiency of the system.

Moreover, the coaxial arrangement of the drive axis and reduction axis enables the use of a two-stage reduction gearbox while keeping the overall dimensions at a minimum; this is difficult to be achieved with currently used solutions without either increasing the volume of the container body or positioning the reduction gearbox outside of said container body, with all the problems resulting therefrom.

Furthermore, said pedal shaft 90 provides an anti-rotation system which allows the movement of the pedal shaft 90 to be disengaged from the movement of the transmission ring gear 124 when the cyclist is not pushing on the pedals, for example while riding on a flat road or downhill.

The anti-rotation system includes a ratchet mechanism having an externally-toothed ring gear 902 which is integral with the pedal shaft 90, and coupling means 903 arranged on the locking member 101 to cooperate with said ring gear 902.

When the cyclist is pushing on the pedals, such a ratchet mechanism transmits the rotation from the pedal shaft 90 to the locking member 101 having secured thereto the transmission ring gear 124 and the second planet carrier 126, while the ratchet mechanism allows the movement of the pedal shaft 90 to be disengaged from the rotation of both the drive wheel and the apparatus according to the present invention when the cyclist is not pushing on the pedals, for example while riding on a flat road or downhill.

When the cyclist is not pedalling, the transmission ring gear is rotated by the drive wheel via the transmission chain, and the anti-rotation system allows the reduction gearbox, which is driven by the transmission ring gear, to be rotated so as to move the drive means which, in this case, are operating in the generator-mode to recharge the power supply/storage means of the electronic system 2, while preventing the pedal shaft 90 from rotate so that the pedals can be kept stationary.

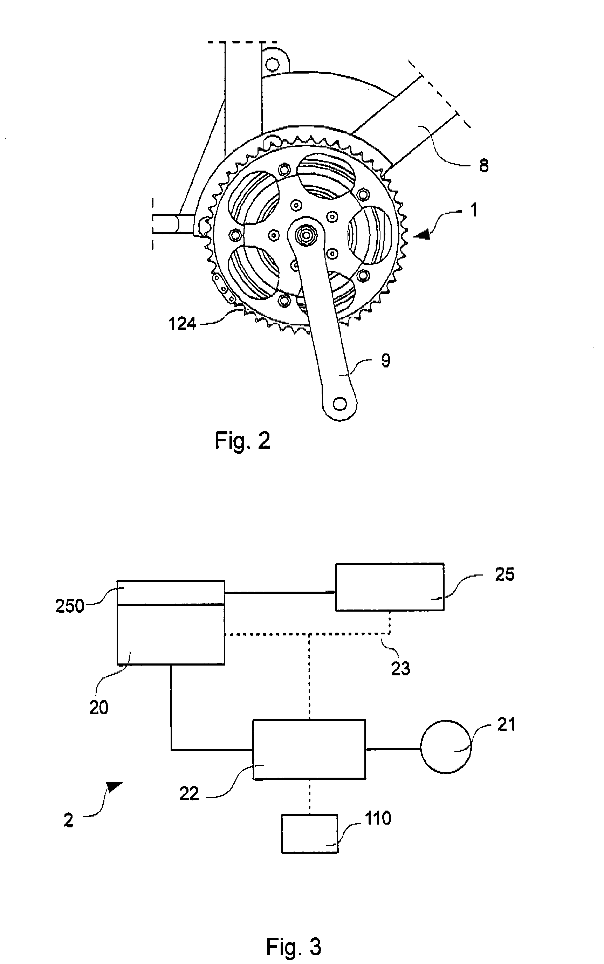

Fig. 2 is a side view of the apparatus according to the present invention as installed on the frame of a bicycle.

Under the assumption that like parts are referred to by like reference numerals, the Figure shows the frame 8 of the bicycle, the support 9 for the pedals, the transmission ring gear 124, and the pedalling assisting apparatus 1.

From the figure it can be noted that the pedalling assisting apparatus 1 is not exposed to the road environment, thus avoiding any impacts or issues related to dust, mud or dirt collecting onto the moving parts if exposed.

The Figure also shows the reduced overall dimensions of the pedalling assisting apparatus 1, which is extremely compact due to the fact that the axis of the drive-reduction assembly is coaxial with the axis of the pedals 90.

In fact, since the axis of the drive-reduction assembly is coaxial with the axis of the pedal shaft 90, the pedalling assisting apparatus 1 is kept compact, thus reducing both its overall dimensions and its weight while broadening its application fields.

Moreover, since the spaces are optimized compared to the solutions of the prior art, which do not involve positioning the axis of the drive-reduction assembly and the axis of the pedal shaft on the same plane, the pedalling assisting apparatus according to the present invention enables either the installation of drive means increased in power output when the overall dimensions are kept constant, or the use of a pedalling assisting apparatus 1 decreased in size when the power output is kept constant.

Fig. 3 is a block diagram of the electronic control system for the apparatus according to the present invention.

The electronic control system 2 comprises power supply/storage means 20, drive means 21, inverter means 22 provided with processing/control means, display/control means 25, and pedalling sensor means 110.

In different embodiments of the apparatus according to the present invention, said pedalling sensor means 110 comprise bearings with sensor(s) for detecting the number of revolutions of the pedal shaft 90 and/or torque-detecting means, depending on the type of application, and said electronic control system 2 further comprises means for detecting the speed of the bicycle.

Said inverter means 22 comprise a rectifier-inverter assembly in which the inverter means allow direct current to be transformed into alternating current, and the rectifier means allow alternating current to be converted into direct current.

In fact, the drive means 21 work with alternating current, while the power supply/storage means 20 work with direct current; this makes necessary the use of a rectifier-inverter assembly for converting direct electric current into alternating electric current and vice versa.

The processing/control means for the inverter means 22 communicate with the power supply/storage means 20, the display means 25 and the sensor means 110 installed in the proximity of the pedal shaft via the connection means 23.

The power supply/storage means 20 are located outside of the container body 100, and they advantageously comprise electric battery packs provided with BMSs (Battery Management Systems), i.e. electronic balancing/control systems which allow the charge of said battery pack to be monitored and equalized.

The drive means 21 comprise an electric motor, advantageously a three-stage brushless electric motor, which acts either as an electric current generator to recharge the power supply means 20 when no power is required, or as a motor when power is required.

Advantageously, the connection means 23 comprise CAN-buses, i.e. a multicast shared serial bus standard which allows devices and components of an electronic system to exchange system information with each other.

The display/control means 25 comprise a power supply 250 supplying electric current and advantageously located in the proximity of the power supply/storage means 20, and a controller provided with a display through which the cyclist can change the settings and parameters of the processing/control system for the inverter means 22.

The operational mode of the drive means 21, which can act either as an electric current generator or as a mechanical power supply, is selected by the processing/control means for the inverter means 22 based on both the signal received from said sensor means 110 and the parameters set by the cyclist.

When the sensor means 110 detect a number of revolutions which is lower than a certain threshold value, the drive means 21 are either inoperative or operative in the generator-mode to produce electric current which is stored in the power supply/storage means 20; when said sensor means 110 detect a number of revolutions which is greater than a certain threshold value, the drive means 21 are operative in the motor-mode to provide mechanical power to the mechanical epicyclical reduction gearbox, and therefore to the transmission ring gear, for assisting or replacing the cyclist in pedalling.

In fact, the logic of the system, resulting from current legislation, is to activate the drive means 21 in the motor-mode exclusively when the cyclist is pushing on the pedals, and to deactivate them when the cyclist is not pedalling or he/she reduces the pedalling rate and therefore the number of revolutions of the pedal shaft 90.

Advantageously, as for the production of electric current, the operation of the drive means 21 in the generator-mode depends on the applications and the user, who can easily set the type of application via the display/control means 25.

When the drive means 21 are in the motor-mode and a bicycle speed of more than 25 km/h is detected by the sensor means intended for detecting the speed of the bicycle, the processing/control means prevent said drive means 21 from outputting power since motor-vehicles exceeding such a speed are considered as motorcycles by current legislation, while pedal-driven vehicles, such as bicycles, are not included within this category.

The inverter means 22 act to control the electric current produced by the drive means 21 when in the generator-mode, by either transforming it from alternating electric current into direct electric current so that it can be stored in the power supply/storage means 20, or transforming the direct electric current into alternating electric current when the drive means 21 are working in motor-mode.

In a further embodiment, the pedalling assisting apparatus according to the present invention involves the use of means for detecting the torque provided by the cyclist, so that the electronic control system 2 can work on the torque provided by the cyclist and not on the number of revolutions of the pedal shaft.

Said torque-detecting means comprise strain gauges or devices capable of detecting the amount of strain of the supports making the container body 100 integral with the frame 8 of the bicycle, so as to relate the amount of strain of said supports with the torque provided by the cyclist by means of suitable calculation algorithms through which the processing/control means work.

Advantageously, the amount of strain of the supports is detected by said sensor means which then transmit it to the processing/control means, in which the overall torque provided by both the cyclist and the drive means is calculated and the torque provided by the drive means, if present, is then subtracted from the overall torque in order to obtain the torque provided by the cyclist, which is then used to establish whether the drive means have to be either activated or increased/reduced in power output depending on they are inactive or active, respectively.

Since the pedalling assisting apparatus according to the present invention is enclosed and protected by the container body, said apparatus can eliminate the risk of contamination on the road and impacts.

The coaxial arrangement of the axis of the drive-reduction assembly and the axis of the pedal shaft allows the overall dimensions of the apparatus according to the present invention to be reduced and its efficiency to be increased.

Furthermore, the use of a mechanical epicyclical reduction gearbox enables the use of drive means which are reduced in size, thereby obtaining an advantage in terms of overall dimensions, weight and efficiency of the apparatus according to the present invention.

## Claims

1. Pedalling assisting apparatus for pedal-driven vehicles, comprising a container body (100) connectable to the frame of the vehicle in the proximity of the pedal shaft (90), drive means (21), at least one electronic control system (2), and mechanical reduction means (12) operatively connected with both the pedal shaft (90) and the drive means (21), **characterized in that** the axis of the drive means (21), the axis of the mechanical reduction means (12) and the axis of the pedal shaft (90) are coaxial with each other.

2. Pedalling assisting apparatus according to claim 1, wherein said electronic control system (2) comprises inverter means (22) provided with processing/control means which are interfaced with power supply/storage means (20), display/control means (25) and pedalling sensor means (110) via connection means (23), said electronic system (2) being connected with the drive means (21).

3. Pedalling assisting apparatus according to claim 2, wherein said pedalling sensor means (110) comprise bearings with sensor(s) for detecting the number of revolutions of the pedal shaft (90).

4. Pedalling assisting apparatus according to claim 2, wherein said pedalling sensor means (110) comprise torque-detecting means.

5. Pedalling assisting apparatus according to claim 2, wherein said electronic control system (2) further comprises sensor means for detecting the speed of the bicycle.

6. Pedalling assisting apparatus according to claim 1 or claim 2, wherein said drive means comprise an electrical apparatus (21) operatively connected with the electronic system (2) and comprising stator means (10), rotor means (11), and a rotatable disc (7) having arranged thereon said rotor means (11).

7. Pedalling assisting apparatus according to any one of claims 1 to 6, wherein said mechanical reduction means (12) comprise mechanical epicyclical reduction means having a sprocket wheel (120) acting as a pinion and keyed to the cylindrical member (71) of the disc (7), a first plurality of toothed (planet) wheels (121), a second plurality of toothed (planet) wheels (122), an internally-toothed ring gear (123), a first planetary gear carrier (or planet carrier) (125), and a second planetary gear carrier (or planet carrier) (126) having secured thereto the transmission ring gear (124) via the locking member (101).

8. Pedalling assisting apparatus according to claim 7, wherein the sprocket wheel (120) acting as a pinion (or sun gear) is meshed with the first plurality of toothed wheels (121) to rotate the first planet carrier (125), said first plurality of toothed wheels (121) being operatively connected with said first planet carrier (125) and meshed with the internally-toothed ring gear (123).

9. Pedalling assisting apparatus according to claim 8, wherein a first gear assembly comprising said sprocket wheel (120) acting as a pinion, said first plurality of toothed wheels (121), said first planet carrier (125) and the internally-toothed ring gear (123) allows the first reduction step of the mechanical epicyclical reduction gearbox (12) to be performed.

10. Pedalling assisting apparatus according to any one of the preceding claims 7 to 9, wherein the first planet carrier (125) has a radially-toothed, axially-projecting sleeve (127) which is meshed with the second plurality of toothed wheels (122).

11. Pedalling assisting apparatus according to claims 10, wherein said sleeve (127) is meshed with the second plurality of toothed wheels (122) to rotate the second planet carrier (126), said second plurality of toothed wheels (122) being operatively connected with said second planet carrier (126) and meshed with the internally-toothed ring gear (123).

12. Pedalling assisting apparatus according to claim 11, wherein a second gear assembly comprising the sleeve (127), the second plurality of toothed wheels (122), the internally-toothed ring gear (123) and the second planet carrier (126) allows the second reduction step of the mechanical epicyclical reduction gearbox (12) to be performed.

13. Pedalling assisting apparatus according to any one of the preceding claims 1 to 12, wherein said pedal shaft (90) provides an anti-rotation device allowing the movement of said pedal shaft (90) to be disengaged from the movement of both the transmission ring gear (124) and the mechanical reduction gearbox (12).

14. Pedalling assisting apparatus according to claim 13, wherein said anti-rotation device includes a ratchet mechanism having an externally-toothed ring gear (902) which is integral with the pedal shaft (90), and coupling means (903) cooperating with said ring gear (902) and arranged on the locking member (101), the transmission ring gear (124) and the second planet carrier (126) being secured to said locking member (101).
